# FASCICULE DE BREVET EUROPEEN

(11) **EP 3 698 554 B1**
(45) Date de publication et mention de la délivrance du brevet: **06.12.2023**
(21) Numéro de dépôt: 18800244.8
(22) Date de dépôt: 10.10.2018
(51) Int. Cl.: G01S 3/801, G01S 3/808, H04R 1/08, G01H 3/12, H04R 5/027, H04R 3/00, H04R 1/40

(54) **SYSTEME D'IMAGERIE DE SOURCES ACOUSTIQUES ENVIRONNEMENTALES**
BILDGEBUNGSSYSTEM FÜR UMGEBUNGSSCHALLQUELLEN
IMAGING SYSTEM FOR ENVIRONMENTAL ACOUSTIC SOURCES

(30) Priorité: 17.10.2017 FR 1759730
(43) Date de publication de la demande: 26.08.2020
(73) Titulaire: Observatoire Regional Du Bruit En IDF, 93200 Saint-Denis (FR)
(72) Inventeur: MIETLICKI, Christophe, 92150 Suresnes (FR)
(74) Mandataire: IP Trust
(86) Numéro de dépôt international: PCT/FR2018/052510
(87) Numéro de publication internationale: WO 2019/077231

(56) Documents cités:
- WO-A1-2017/104972
- JP-A- H05 288 598
- US-A1- 2002 181 721
- US-A1- 2009 279 714
- US-A1- 2014 029 761
- US-A1- 2017 311 080
- BUSSET JOËL ET AL: "Detection and tracking of drones using advanced acoustic cameras", VISUAL COMMUNICATIONS AND IMAGE PROCESSING; 20-1-2004 - 20-1-2004; SAN JOSE,, vol. 9647, 13 octobre 2015 (2015-10-13), pages 96470F-1, XP060062661, DOI: 10.1117/12.2194309 ISBN: 978-1-62841-730-2

## Description

### Domaine de l'invention

La présente invention concerne le domaine de la surveillance et de la localisation de sources sonores et plus spécialement de nuisances sonores.

Les nuisances sonores liées au transport, notamment celles qui affectent les riverains des voies de circulation, constituent une préoccupation essentielle, le plus souvent associée aux contextes urbain et périurbain. Le diagnostic ou la prévision d'un environnement sonore nécessite une connaissance de l'émission des véhicules, dans des conditions de circulation réelles.

Le bruit subi est une source de stress et de dégradation de la santé occasionnant en zone urbaine ou industrielle de nombreuses plaintes des habitants, dont il convient de vérifier l'objectivité et la pertinence.

Pour cela, on a développé différentes solutions permettant d'objectiver l'intensité, la nature et la localisation des sources sonores mobiles ou fixes, afin d'en établir une cartographie qui peut être ensuite associée à des cartes topographiques ou à des enregistrements photographiques ou vidéo par exemple.

Le bruit étant souvent géographiquement associé aux transports et à l'industrie lourde, les cartes de bruit sont aussi une source d'indices de pollution ou de problèmes en matière de santé environnementale.

La mesure est réalisée par un sonomètre destiné à mesurer le niveau de pression acoustique et fournir un niveau exprimé en décibels en un point et à un moment donnés.

Pour permettre une localisation de la source sonore par rapport au point de mesure, on utilise généralement un réseau de microphones décalés spatialement, et un traitement informatique déterminant la direction d'arrivée d'une onde sonore par le calcul de ses temps de capture par chaque microphone pour en déduire le retard (τ) ou la différence des temps d'arrivée (TDOA) enregistrée entre deux microphones.

Le réseau de microphones constitue une antenne acoustique permettant la localisation et l'identification de sources bruyantes en champ proche ou lointain, ou encore la localisation d'objets enfouis, la surveillance de structures par émission acoustique, la détection acoustique d'avalanches, la détection sismique et la localisation sous-marine.

Les microphones de mesure sont par exemple constitués de quatre capsules omnidirectionnelles placées à la même distance des autres, formant une structure pyramidale. Cette configuration géométrique est à la base de la technique de triangulation qui permet de localiser très précisément chaque source, à la fois sur le plan horizontal et sur le plan vertical. Chacune des quatre capsules est fixée à l'extrémité de fins tubes en laiton pour éviter la diffraction. Elles forment un tétraèdre constituant une configuration géométrique adaptée pour identifier à la fois la distance, l'azimut et l'élévation. Afin d'optimiser la précision spatiale, toutes les réponses des capsules sont analysées et comparées de manière récursive afin de trouver le meilleur couple et atteindre une résolution spatiale sous +/-2° dans toutes les directions.

### Etat de la technique

On connaît dans l'état de la technique la demande de brevet américaine US2002181721 décrivant une solution connue pour localiser et afficher avec précision la source d'un son tel qu'un bruit dans une usine ou similaire, comprenant une paire de microphones (M1, M3) et une autre paire de microphones (M2, M4), la direction de la source sonore étant estimée à partir d'une différence entre les temps d'arrivée des sons aux microphones (M1, M3) et une différence entre les temps d'arrivée des sons aux microphones (M2, M4). Une image autour de l'emplacement estimé de la source sonore est captée par une caméra et l'emplacement estimé ci-dessus de la source sonore est affiché sur l'image affichée sur l'écran d'un ordinateur personnel.

On connaît aussi l'article Busset, Joël & Perrodin, Florian & Wellig, Peter & Ott, Beat & Heutschi, K & Rühl, Torben & Nussbaumer, Thomas. (2015). Détection and tracking of drones using advanced acoustic cameras. 96470F. 10.1117/12.2194309 décrivant un capteur passif qui comprend un réseau de microphones de 120 éléments et une caméra vidéo. L'algorithme d'imagerie acoustique en temps réel de toutes les directions, utilise la phase des signaux sonores. Un algorithme de suivi est alors capable de suivre les sources sonores. De plus, un algorithme de formation de faisceau extrait sélectivement le son provenant de chaque source sonore suivie. Ce signal sonore extrait peut être utilisé pour identifier le type d'objet.

La demande de brevet US2014029761 décrit un autre exemple d'équipement comprenant un système de caméra et un système d'optimisation. Le système d'optimisation est configuré pour communiquer avec le système de caméra. Au moins un microphone est connecté au système d'optimisation. Le système d'optimisation est configuré pour ajuster une forme de faisceau du au moins un microphone sur la base, au moins en partie, des informations de focalisation de la caméra du système de caméra.

La demande de brevet WO2017104972A1 décrit une caméra acoustique omnidirectionnelle utilisant un capteur acoustique MEMS, la caméra acoustique omnidirectionnelle étant caractérisée en ce qu'elle comprend : un corps de sphéricité dans lequel est formée une partie creuse ; des capteurs de détection de bruit MEMS disposés sur la surface du corps de sphéricité de sorte à être exposés et espacés les uns des autres; une carte d'acquisition de signal acoustique raccordée électriquement à chaque capteur de détection de bruit MEMS et contenue dans la partie creuse du corps de sphéricité; un miroir réfléchissant omnidirectionnel fixé de sorte à être espacé de la partie supérieure d'un côté du corps de sphéricité; et une lentille d'imagerie fixée à la partie supérieure d'un côté du corps de sphéricité de sorte à être exposée vers le haut, ce qui permet de prendre une image optique réfléchie dans le miroir réfléchissant.

On connaît la demande de brevet JPH05288598 décrivant un capteur composé d'un premier microphone installé sur la pointe d'un arbre et trois autres microphones installés dans des positions séparées à égale distance de cet arbre comme constituant les sommets d'un tétraèdre régulier.

On connaît aussi le brevet US2009/279714 décrivant un appareil et un procédé de localisation d'une source sonore dans un robot. L'appareil comprend une unité de microphone mise en oeuvre par un ou plusieurs microphones, qui capte un son à partir d'un espace tridimensionnel. L'appareil comprend également un localisateur de source sonore pour déterminer une position de la source sonore conformément à la différence de temps des arrivées (TDOA) et une puissance la plus élevée du son capté par l'unité de microphone.

On connaît enfin la demande de brevet US20170311080 décrivant un groupement de microphones disposés dans un agencement tétraédrique autour d'un dispositif d'enregistrement.

### Inconvénients de l'art antérieur

Les solutions de l'art antérieur présentent différents inconvénients.

Les solutions mettant en oeuvre un réseau de microphones sont mal adaptées à une utilisation externe car elles nécessitent un positionnement complexe des nombreux microphones, et un traitement complexe des signaux fournis par l'ensemble de microphones.

Les solutions mettant en oeuvre un faisceau de microphones formant un tétraèdre dirigé vers le haut sont très sensibles aux intempéries.

Par ailleurs, l'exploitation des informations fournies par ces solutions pour réaliser une carte sonore nécessite une connaissance très précise de la position de l'antenne.

### Solution apportée par l'invention

Afin de répondre à ces inconvénients, la présente invention concerne un système de localisation de sources sonores et une antenne pour la mise en oeuvre d'un tel système.

Selon son acception la plus générale, l'invention définit un système de localisation d'au moins une source sonore conforme à la revendication 1 ou à l'une des revendications dépendantes.

### Description détaillée d'un exemple non limitatif de l'invention

La présente invention sera mieux comprise à la lecture de la description détaillée d'un exemple non limitatif de l'invention qui suit, se référant aux dessins annexés où :

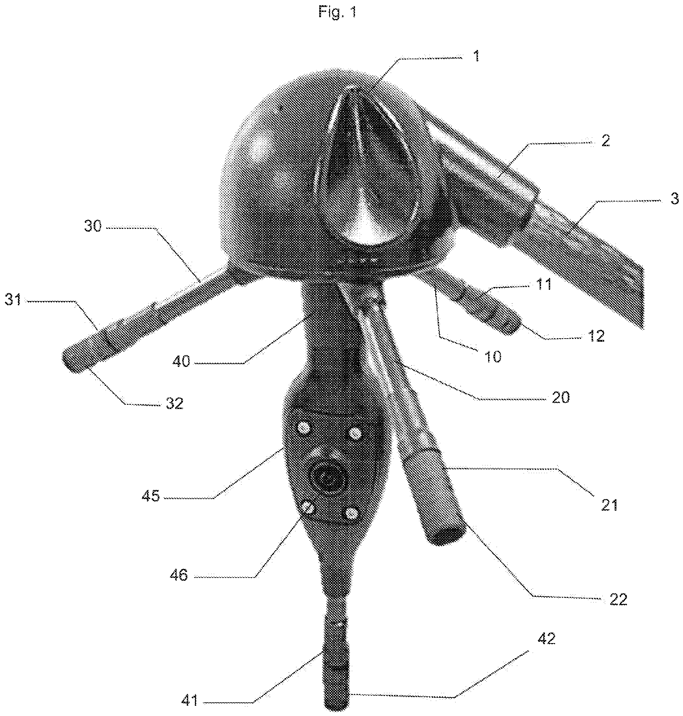

- la figure 1 représente une vue en perspective d'une antenne sonore selon l'invention
- la figure 2 représente une vue en perspective d'un support de microphone
- les figures 3 et 4 représentent des vues en perspective de trois quart avant et de trois quart arrière de la coiffe de microphone
- la figure 5 représente une vue en perspective de trois quart avant d'une variante de réalisation de la coiffe de microphone
- la figure 6 représente le schéma de principe d'une première partie du circuit électronique de traitement des signaux délivrés par les microphones
- la figure 7 représente le schéma de principe d'une deuxième partie du circuit électronique de traitement des signaux délivrés par les microphones
- les figures 8 et 9 représentent une vue en perspective de trois quart respectivement avant et arrière d'une variante de réalisation de la coiffe de microphone.

### Architecture générale de l'antenne sonore

L'antenne selon l'exemple de réalisation décrit est constituée par un noyau rigide (1) formé par une sphère, réalisée par exemple en polyamide moulé, présentant une douille d'accouplement (2) pour le raccordement à une tige (3) de support.

Ce noyau rigide (1) est prolongé par quatre bras (10, 20, 30, 40) dirigés vers le bas, définissant un tétraèdre où quatre sommets portent un microphone supporté par un support respectivement (11, 21, 31, 41).

Le bras central (40) est dirigé vers le bas, selon une direction sensiblement verticale. Les trois autres bras (10, 20, 30) sont également dirigés vers le bas et forment avec l'axe vertical un angle d'environ 109°.

Le bras central (40) présente une platine (45) pour le montage d'un capteur optique (46). La position du centre optique du capteur optique (46) est confondue avec le centre géométrique du tétraèdre.

Par « confondu » on entend au sens du présent brevet, le fait que le décalage entre le centre optique et le centre géométrique n'excède pas 20% de la longueur d'un bras (10, 20, 30, 40). Le but est de réduire au maximum les erreurs de parallaxe entre l'image sonore et l'image optique.

Chaque tête de capture sonore est constituée par un support dans lequel vient se loger un microphone (11, 21, 31, 41) de type MEMS (acronyme de « Micro Electro Mechanical System »).

### Structure d'une tête de capture sonore

Chaque tête de capture sonore est constituée par un microphone MEMS logé dans un ensemble en polyamide formé par un support de microphone (11, 21, 31, 41) et une coiffe (12, 22, 32, 42).

Les processus de fabrication par gravure chimique et lithographie utilisés pour les microphones MEMS permettent un meilleur contrôle qualité que ceux utilisés pour les microphones à électret.

La rigidité et la précision de fabrication des membranes MEMS permettent de réduire significativement la distance entre la membrane et la plaque arrière ; le microphone peut ainsi fonctionner avec une charge très efficace de 10 volts, maintenue par une pompe de charge unique au lieu du matériau d'électret à haute capacité.

Le microphone MEMS se présente sous la forme d'un composant de forme parallélépipédique.

### Description détaillée du support

Le support de microphone (11, 21, 31, 41) est réalisé par impression 3D d'un polymère, pour former une pièce présentant une embase parallélépipédique (50), de section carrée, dont l'extrémité distale présente un logement (51) de section complémentaire à la section transversale du microphone.

Le support de microphone (11, 21, 31, 41) comprend aussi une jupe annulaire (53) prolongée par un raccord proximal (54) pour la liaison avec un bras (10, 20, 30, 40).

La jupe (53) présente une forme tronconique, avec, à son extrémité distale, une section intérieure supérieure à la section extérieure de l'embase (50). L'embase (50) se prolonge en avant de la jupe (53).

Une ouverture (54) est prévue pour permettre le passage des fils de branchement du microphone MEMS.

### Description de la coiffe

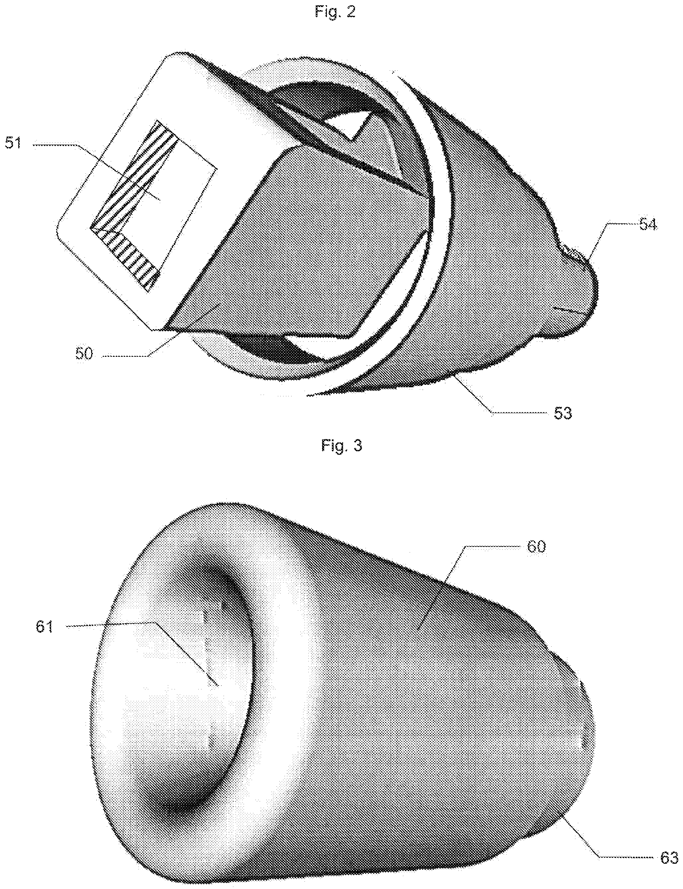

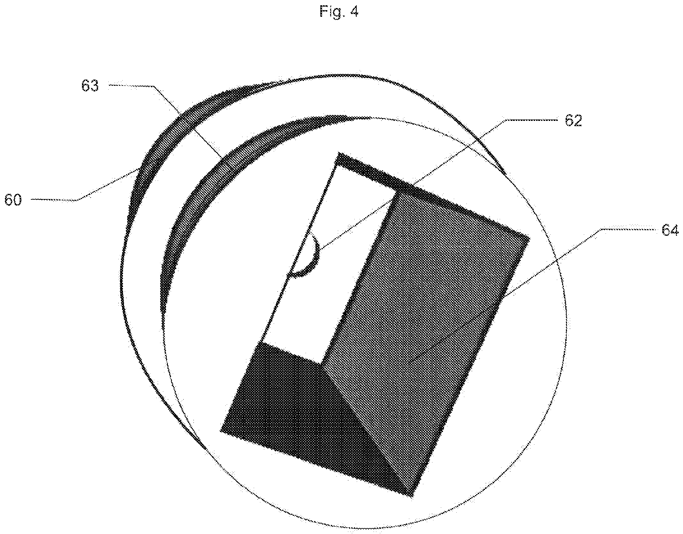

Les figures 3 et 4 représentent des vues de la coiffe (12, 22, 32, 42). Elle présente une forme générale cylindrique évasée, avec une section distale supérieure à la section proximale.

La partie avant (60) présente un canal longitudinal tronconique (61) de section circulaire débouchant dans un trou (62) correspondant à l'évent du microphone.

La partie arrière (63) présente un canal longitudinal de section carrée (64), complémentaire à la section extérieure de l'embase (50) du support de microphone.

La coiffe est glissée sur l'embase (50) après positionnement du microphone, pour former un ensemble protégeant le microphone des intempéries et permettant une liaison avec la tige (10, 20, 30, 40).

### Variante de réalisation

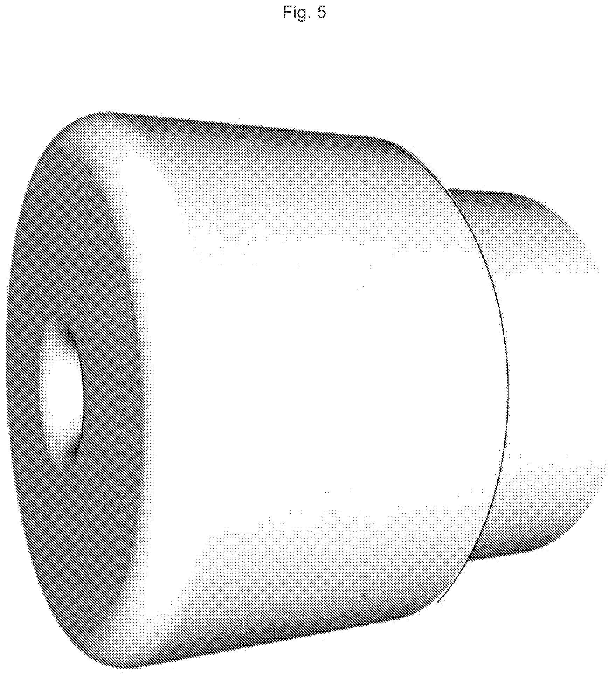

La figure 5 représente une variante de réalisation de la coiffe de microphone, où le corps (60) présente une forme cylindrique, percée par une ouverture circulaire (61) d'une section inférieure à 50% de la section du corps (60).

### Exploitation des signaux produits par l'antenne sonore

L'exploitation des signaux délivrés par les quatre microphones est réalisée de manière connue.

A titre d'exemple, les traitements se basent sur l'estimation des décalages temporels entre les signaux sonores reçus par des paires de microphones (TDOA, pour « Time Différence Of Arrival », c'est-à-dire « différence de temps d'arrivée »). Ces estimations sont utilisées, avec la connaissance des positions des microphones, pour calculer des courbes hyperboliques, dont l'intersection donne la position de la source. Les décalages temporels peuvent notamment être estimés par la méthode dite PHAT-GCC (pour « PHAse Transform - Generalized Cross-Correlation », ou « transformation de phase - intercorrélation généralisée ») qui exploite le calcul d'une intercorrélation - ou corrélation croisée - entre signaux préalablement « blanchis » par filtrage. La méthode PHAT-GCC est décrite plus en détail dans l'article de Ch. H. Knapp et G. C. Carter « The Generalized Corrélation Method for Estimation of Time Delay », IEEE Transaction on Acoustics, Speech and Signal Processing, Vol. ASSP-24, No. 4, août 1976 pp. 320 - 327.

Le traitement peut aussi combiner la synthèse d'un faisceau acoustique orientable et l'intercorrélation généralisée avec transformation de phase. Cette méthode est dénommée SRP-PHAT (pour « Steered Response Power - PHAse Transform » ou « puissance de réponse dirigée - transformation de phase »).

### Représentation de la carte sonore

Les informations résultant de l'analyse des signaux générés par l'antenne sonore sont représentées sous forme d'objets graphiques superposés à l'image acquise par le capteur optique (46), par exemple sous forme de séquence animée ou d'une carte fixe d'accumulation des intensités sonores.

Les objets graphiques sont par exemple des zones géométriques superposées à l'image, dont la couleur est calculée en fonction de l'intensité instantanée ou cumulée, et la taille est représentative de l'étalement spatial de la source sonore.

### Traitement des données sonores

Les signaux transmis par les microphones sont numérisés pour permettre l'exécution d'un programme informatique de calcul des décalages temporels de type PHAT-GCC. Ce traitement fournit l'angle entre un axe de référence passant par le centre géométrique des quatre microphones et la ou les sources, ainsi que l'intensité sonore mesurée de chacune de ces sources.

Les données délivrées par le circuit de traitement des signaux générés par les microphones sont enregistrées dans une mémoire permanente ou tampon sous la forme de paquets dont la trame comprend pour chaque source identifiée :
- une information numérique représentative de la direction angulaire de la source par rapport au centre géométrique de l'antenne sonore
- une information numérique représentative de l'intensité sonore de la source
- l'horodatage de l'acquisition
- un identifiant unique.

Ces données sont transmises à un serveur, ainsi que les images horodatées captées par la caméra (46), pour permettre une exploitation telle que la réalisation d'une représentation cartographique ou la production d'alerte.

### Variante de réalisation

La figure 5 représente une variante de réalisation de la coiffe de microphone, où le corps (60) présente une forme cylindrique, percée par une ouverture circulaire (61) d'une section inférieure à 50% de la section du corps (60).

### Circuits électroniques

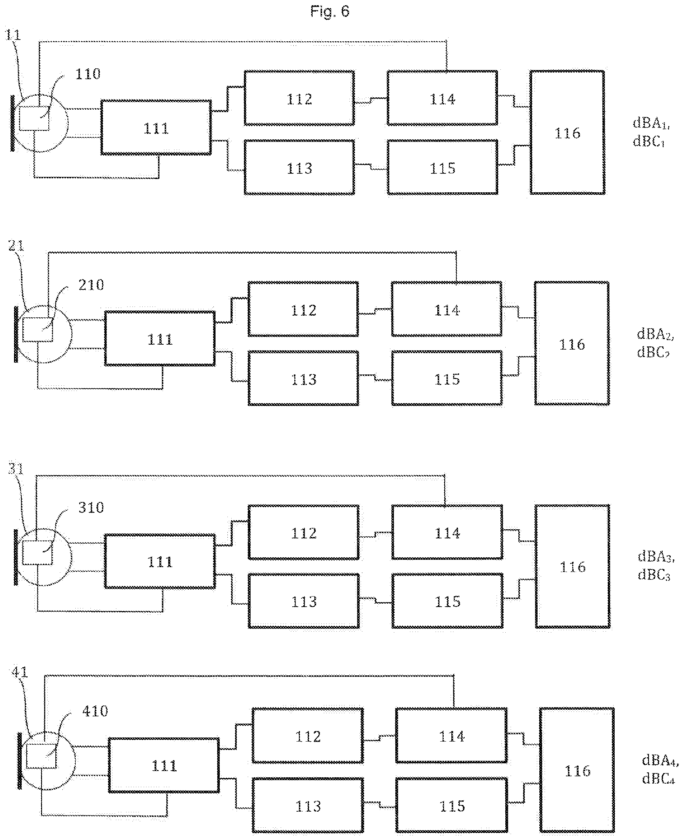

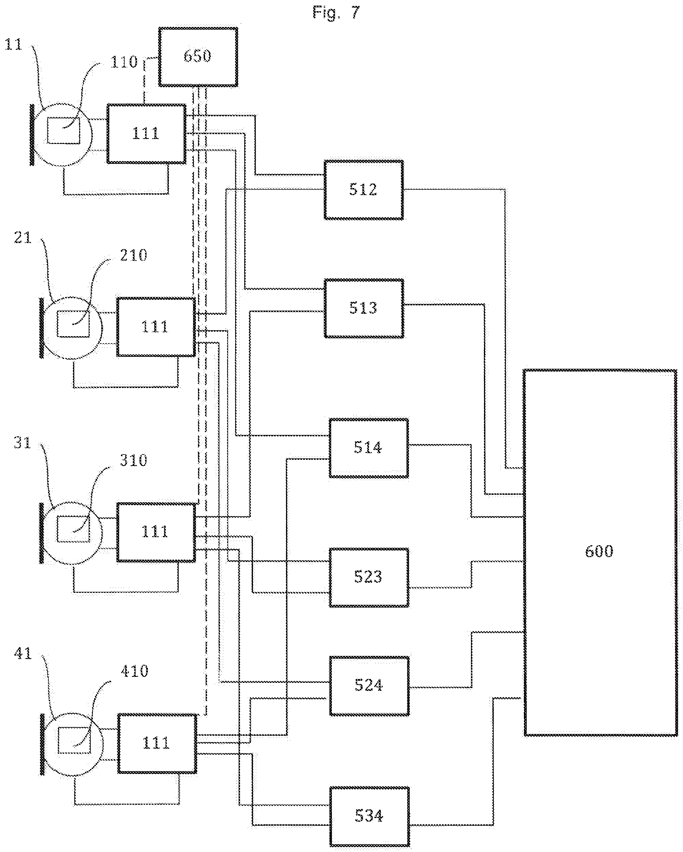

Les figures 6 et 7 représentent les schémas de principe du circuit électronique de traitement des signaux délivrés par les microphones (11, 21, 31, 41).

Pour déterminer l'intensité sonore et transmettre à un serveur distant des données de taille raisonnable, on procède à un traitement permettant de déterminer périodiquement, par exemple toutes les 100 millisecondes, des données numériques représentatives, pour chacun des microphones, des puissances sonores dBA et dBC correspondant à une pondération par les courbes A et C qui correspondent à la sensibilité de l'oreille. Ces pondérations corrigent les niveaux sonores mesurés par les microphones. Les pondérations A et C sont conformes aux connaissances usuelles de l'homme de métier.

Par ailleurs, chaque microphone (11, 21, 31, 41) intègre une mémoire EEPROM (110, 210, 310, 410) dans laquelle est enregistrée :
- une table contenant les points de mesure dans une série de fréquence, par exemple 11 fréquences de référence, mesurée lors d'une étape d'étalonnage du microphone, avant l'installation sur l'antenne
- et/ou un niveau d'offset mesurée lors de l'étape d'étalonnage
- et optionnellement un numéro de série du microphone.

Cette table d'étalonnage permet de commander une auto-calibration des circuits électroniques.

Le circuit électronique illustré par la figure 6 comporte, pour chacun des microphone (11, 21, 31, 41) intégrant généralement un circuit analogique de pré-traitement et de pré-amplification, un convertisseur analogique-digital (111) assurant l'échantillonnage du signal délivré par le microphone, ainsi qu'une correction en fonction des données lues dans l'EEPROM (110, 210, 310, 410) du microphone correspondant.

Les signaux numériques sont transmis à un filtre A (112) correspondant à la loi de pondération A et un filtre C (113) correspondant à la loi de pondération C. Ces signaux sont ensuite traités par un module (114, 115) recevant la donnée d'offset enregistrée dans l'EEPROM (110, 210, 310, 410) du microphone correspondant.

Ce circuit délivre pour chacun des microphone (11, 21, 31, 41) un couple de données numériques dBA, dBC avec une périodicité de 100 ms par exemple.

Par ailleurs, les signaux numériques issus de chacun des convertisseurs analogiques-digitaux sont transmis à une série de six modules de calcul des décalages temporels des couples de microphones, qui estimés par la méthode dite PHAT-GCC (pour « PHAse Transform - Generalized Cross-Correlation », ou « transformation de phase - intercorrélation généralisée »). Ces modules (512, 513, 514, 523, 524, 534) exploitent le calcul d'une intercorrélation - ou corrélation croisée - entre signaux préalablement « blanchi » par filtrage. Une horloge (650) assure la synchronisation des modules (512, 513, 514, 523, 524, 534).

La méthode PHAT-GCC est décrite plus en détail dans l'article de Ch. H. Knapp et G. C. Carter « The Generalized Corrélation Method for Estimation of Time Delay », IEEE Transaction on Acoustics, Speech and Signal Processing, Vol. ASSP-24, No. 4, août 1976 pp. 320 - 327.

Les signaux représentatifs des décalages temporels des six combinaisons de couples de microphones sont traités par un processeur (600) délivrant périodiquement, par exemple toutes les 100 millisecondes, un couple de données représentatifs de la position angulaire selon deux plans perpendiculaires de la source sonore par rapport au centre acoustique de l'antenne.

### Association d'un lidar

Selon une autre variante très avantageuse, le système de localisation comprend en outre un lidar pour la mesure de la distance de la source sonore.

La réflexion du laser à partir de la source sonore est détectée et analysée par des récepteurs dans le capteur lidar. Ces récepteurs enregistrent la période précise qui s'écoule entre le moment où l'impulsion laser quitte le système et celui où elle est renvoyée pour calculer la distance entre le capteur et la cible. Ces mesures de distance sont transformées aux mesures de points tridimensionnels réels de la cible réflectrice dans l'espace objet.

Les données ponctuelles sont post-traitées après l'étude de la collecte des données lidar en coordonnées x,y,z très précises en analysant la plage de temps du laser et l'angle de balayage laser.

Ces données viennent compléter les données résultant du traitement des signaux délivrés par les microphones (11, 21, 31, 41) et par la caméra (46).

### Image équirectangulaire

Selon une autre variante, le moyen d'imagerie (46) est constitué de deux caméras équipées d'objectifs hypergones (en anglais « fish eye ») associées à un circuit de traitement délivrant une image de projection cylindrique équidistante, encore appelée projection équirectangulaire.

### Variante concernant une coiffe démontable

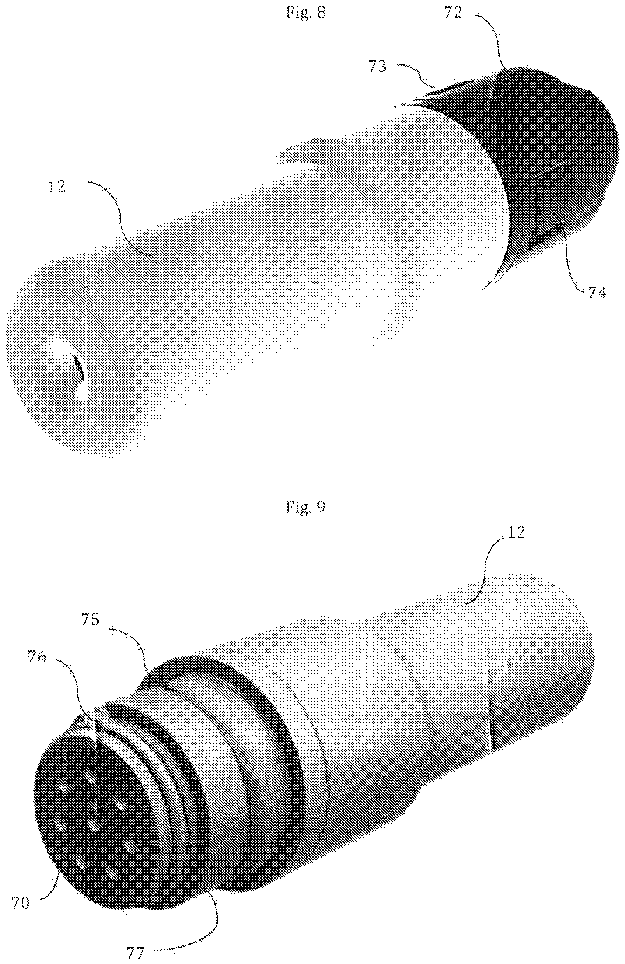

Les figures 8 et 9 présente une variante de réalisation de microphone intégré dans une coiffe (12) constituée par une coque rigide en matière plastique présentant à la partie arrière un connecteur (70) de type IP67.

Le connecteur (70) peut être engagé dans un support (72) formé par une embase cylindrique présentant des pattes de clipsage (73, 74) dont le talon vient s'engager dans une gorge annulaire (75) prévue à l'extrémité arrière de la coiffe (12). Cette extrémité arrière est également entourée par un joint annulaire (76) par exemple en Néoprène (nom commercial) assurant l'étanchéité du microphone.

Une bague cylindrique (77) en arrière de la gorge annulaire (75) assure le positionnement précis de la coiffe (12) par rapport au support (72).

## Revendications

1. - Système de localisation d'au moins une source sonore comprenant une antenne acoustique constituée de quatre microphones (11, 21, 31, 41) placés aux sommets d'un tétraèdre, et un circuit de traitement des signaux électriques pour calculer une information représentative de la direction de la source sonore par rapport à ladite antenne acoustique, ladite antenne acoustique comprenant en outre au moins un moyen d'imagerie (46) **caractérisé en ce que** le centre optique dudit moyen d'imagerie (46) est confondu avec le centre géométrique dudit tétraèdre.

2. - Système de localisation d'au moins une source sonore selon la revendication 1 **caractérisé en ce que** ladite antenne acoustique est constituée de quatre bras (10, 20, 30, 40) dirigés vers le bas et portant chacun à leur extrémité un microphone (11, 21, 31, 41).

3. - Système de localisation d'au moins une source sonore selon la revendication 1 **caractérisé en ce que** ladite antenne acoustique est constituée de trois bras (10, 20, 30) de même longueur, dirigés vers le bas, et un bras (40) dirigé vers le haut, chaque bras (10, 20, 30, 40) portant à son extrémité un microphone (11, 21, 31, 41).

4. - Système de localisation d'au moins une source sonore selon la revendication 1 **caractérisé en ce que** lesdits microphones (11, 21, 31, 41) sont de type MEMS.

5. - Système de localisation d'au moins une source sonore selon la revendication 1 **caractérisé en ce que** chaque microphone comprend un composant actif intégré dans un ensemble formé par un support et une coiffe (12, 22, 32, 42) en un polymère moulé.

6. - Système de localisation selon la revendication 5 **caractérisé en ce que** chacun desdits microphones est intégré dans un ensemble formé par un support et une coiffe (12, 22, 32, 42) en un polymère moulé.

7. - Système de localisation selon la revendication 6 **caractérisé en ce que** chacun desdits microphones est logé dans un ensemble en matière plastique formé par un support présentant à son extrémité proximale un moyen de liaison avec un bras de liaison avec le noyau de ladite antenne accoustique et à son extrémité distale une embase (50) présentant un logement (51) pour le positionnement du composant actif, une coiffe (12, 22, 32, 42) présentant une ouverture (61) débouchant dans un trou (62) communiquant avec l'évent du microphone, et un prolongement (63) présentant un canal (64) de section complémentaire de la section de ladite embase (50).

8. - Système de localisation selon la revendication précédente **caractérisé en ce que** lesdites coiffes présentent une forme cylindrique (60) avec une ouverture (61) débouchant dans un trou (62) communiquant avec l'évent du microphone, la section dudit trou (61) étant inférieure à 50% de la section extérieure de ladite coiffe cylindrique (60).

9. - Système de localisation selon la revendication 7 **caractérisé en ce que** lesdites coiffes présentent une forme conique (60) avec une ouverture conique (61) débouchant dans un trou (62) communiquant avec l'évent du microphone, la section d'entrée dudit trou conique (61) étant supérieure à 60% de la section extérieure de ladite coiffe cylindrique (60).

10. - Système de localisation selon la revendication 1 **caractérisé en ce que** le système de localisation comprend en outre un lidar pour la mesure de la distance de la source sonore.

11. - Système de localisation selon la revendication 1 **caractérisé en ce que** ledit moyen d'imagerie (46) est constitué de deux caméras équipées d'objectifs hypergones (en anglais « fish eye ») associées à un circuit de traitement délivrant une image de projection cylindrique équidistante.

12. - Système de localisation selon la revendication 6 **caractérisé en ce que** lesdites coiffes (12, 22, 32, 42) présentent chacune une extrémité arrière munie d'une gorge annulaire (75) prolongée par un anneau cylindrique venant s'engager dans un support (72) présentant des pattes de clipsage (73, 74) dont le talon vient s'engager dans ladite gorge annulaire (75).

## Patentansprüche

1. System zur Lokalisierung mindestens einer Schallquelle, umfassend eine akustische Antenne, die aus vier Mikrophonen (11, 21, 31, 41) besteht, die an den Spitzen eines Tetraeders platziert sind, und eine Schaltung zur Verarbeitung elektrischer Signale, um eine Information, die für die Richtung der Schallquelle in Bezug auf die akustische Antenne repräsentativ ist, zu berechnen, die akustische Antenne ferner umfassend mindestens ein Bildgebungsmittel (46),
**dadurch gekennzeichnet, dass** das optische Zentrum des Bildgebungsmittels (46) mit dem geometrischen Zentrum des Tetraeders zusammenfällt.

2. System zur Lokalisierung mindestens einer Schallquelle nach Anspruch 1, **dadurch gekennzeichnet, dass** die akustische Antenne aus vier nach unten gerichteten Armen (10, 20, 30, 40) besteht, die jeweils an ihrem Ende ein Mikrofon (11, 21, 31, 41) tragen.

3. System zur Lokalisierung mindestens einer Schallquelle nach Anspruch 1, **dadurch gekennzeichnet, dass** die akustische Antenne aus drei nach unten gerichteten Armen (10, 20, 30) gleicher Länge und einem nach oben gerichteten Arm (40) besteht, wobei jeder Arm (10, 20, 30, 40) an seinem Ende ein Mikrofon (11, 21, 31, 41) trägt.

4. System zur Lokalisierung mindestens einer Schallquelle nach Anspruch 1, **dadurch gekennzeichnet, dass** die Mikrofone (11, 21, 31, 41) der MEMS-Art angehören.

5. System zur Lokalisierung mindestens einer Schallquelle nach Anspruch 1, **dadurch gekennzeichnet, dass** jedes Mikrofon eine aktive Komponente, die in eine durch einen Träger und eine Abdeckung (12, 22, 32, 42) aus einem geformten Polymer ausgebildete Einheit integriert ist, umfasst.

6. Lokalisierungssystem nach Anspruch 5, **dadurch gekennzeichnet, dass** jedes der Mikrofone in eine Einheit, die durch einen Träger und eine Abdeckung (12, 22, 32, 42) aus einem geformten Polymer ausgebildet ist, integriert ist.

7. Lokalisierungssystem nach Anspruch 6, **dadurch gekennzeichnet, dass** jedes der Mikrofone in einer Kunststoffeinheit untergebracht ist, die durch einen Träger ausgebildet ist, der an seinem proximalen Ende ein Mittel zur Verbindung mit einem Arm zur Verbindung mit dem Kern der akustischen Antenne aufweist und an seinem distalen Ende einen Sockel (50), der eine Aufnahme (51) für die Positionierung der aktiven Komponente aufweist, eine Abdeckung (12, 22, 32, 42) eine Öffnungsfläche (61), die in ein Loch (62) mündet, das mit der Mikrofonöffnung in Verbindung steht, aufweist und eine Verlängerung (63) einen Kanal (64) mit einem Abschnitt aufweist, der komplementär zu dem Abschnitt des Sockels (50) ist.

8. Lokalisierungssystem nach dem vorstehenden Anspruch,
**dadurch gekennzeichnet, dass** die Abdeckungen eine zylindrische Form (60) mit einer Öffnungsfläche (61), die in ein Loch (62) mündet, das mit der Mikrofonöffnung in Verbindung steht, aufweisen, wobei der Abschnitt des Lochs (61) weniger als 50 % des äußeren Abschnitts der zylindrischen Abdeckung (60) beträgt.

9. Lokalisierungssystem nach Anspruch 7, **dadurch gekennzeichnet, dass** die Abdeckungen eine konische Form (60) mit einer konischen Öffnungsfläche (61), die in ein Loch (62) mündet, das mit der Mikrofonöffnung in Verbindung steht, aufweisen, wobei der Eingangsabschnitt des Lochs (61) mehr als 60 % des äußeren Abschnitts der zylindrischen Abdeckung (60) beträgt.

10. Lokalisierungssystem nach Anspruch 1, **dadurch gekennzeichnet, dass** das Lokalisierungssystem ferner ein Lidar für die Messung der Entfernung von der Schallquelle umfasst.

11. Lokalisierungssystem nach Anspruch 1, **dadurch gekennzeichnet, dass** das Bildgebungsmittel (46) aus zwei Kameras, die mit Fischaugenobjektiven (auf Englisch "fish eye") ausgestattet ist, besteht, die mit einer Verarbeitungsschaltung verbunden sind, die ein äquidistantes zylindrisches Projektionsbild liefert.

12. Lokalisierungssystem nach Anspruch 6, **dadurch gekennzeichnet, dass** die Abdeckungen (12, 22, 32, 42) jeweils ein hinteres Ende aufweist, das mit einer ringförmigen Nut (75) versehen ist, die durch einen zylindrischen Ring verlängert ist, der in einen Träger (72) eingreift, der Schnapplaschen (73, 74) aufweist, deren Ansatz in die ringförmige Nut (75) eingreift.

## Claims

1. System for locating at least one sound source comprising an acoustic antenna consisting of four microphones (11, 21, 31, 41) placed at the vertices of a tetrahedron, and a circuit for processing the electrical signals in order to calculate an item of information representative of the direction of the sound source relative to said acoustic antenna, said acoustic antenna further comprising at least one imaging means (46), **characterized in that** the optical center of said imaging means (46) coincides with the geometric center of said tetrahedron.

2. System for locating at least one sound source according to claim 1, **characterized in that** said acoustic antenna consists of four arms (10, 20, 30, 40) directed downward and each bearing at its end a microphone (11, 21, 31, 41).

3. System for locating at least one sound source according to claim 1, **characterized in that** said acoustic antenna consists of three arms (10, 20, 30) of the same length, directed downward, and an arm (40) directed upward, each arm (10, 20, 30, 40) bearing at its end a microphone (11, 21, 31, 41).

4. System for locating at least one sound source according to claim 1, **characterized in that** said microphones (11, 21, 31, 41) are of the MEMS type.

5. System for locating at least one sound source according to claim 1, **characterized in that** each microphone comprises an active component integrated into an assembly formed by a support and a cover (12, 22, 32, 42) made of a molded polymer.

6. Location system according to claim 5, **characterized in that** each of said microphones is integrated into an assembly formed by a support and a cover (12, 22, 32, 42) made of a molded polymer.

7. Location system according to claim 6, **characterized in that** each of said microphones is housed in an assembly made of plastics material formed by a support having, at its proximal end, a means for connecting to an arm for connecting to the core of said acoustic antenna and, at its distal end, a base (50) having a recess (51) for positioning the active component, a cover (12, 22, 32, 42) having an opening (61) which opens into a hole (62) that communicates with the vent of the microphone, and an extension (63) having a channel (64) comprising a section that is complementary to the section of said base (50).

8. Location system according to the preceding claim, **characterized in that** said covers have a cylindrical shape (60) comprising an opening (61) which opens into a hole (62) that communicates with the vent of the microphone, the section of said hole (61) being less than 50% of the exterior section of said cylindrical cover (60).

9. Location system according to claim 7, **characterized in that** said covers have a conical shape (60) comprising a conical opening (61) which opens into a hole (62) that communicates with the vent of the microphone, the inlet section of said conical hole (61) being greater than 60% of the exterior section of said cylindrical cover (60).

10. Location system according to claim 1, **characterized in that** the location system further comprises a lidar for measuring the distance from the sound source.

11. Location system according to claim 1, **characterized in that** said imaging means (46) consists of two cameras equipped with fisheye lenses associated with a processing circuit that delivers an equidistant cylindrical projection image.

12. Location system according to claim 6, **characterized in that** said covers (12, 22, 32, 42) each have a rear end provided with an annular groove (75) which is extended by a cylindrical ring that engages in a support (72) having snap-fitting tabs (73, 74) of which the heel engages in said annular groove (75).
